# EUROPEAN PATENT SPECIFICATION

(11) **EP 3 724 521 B1**
(45) Date of publication and mention of the grant of the patent: **15.02.2023**
(21) Application number: 18830981.9
(22) Date of filing: 11.12.2018
(51) Int. Cl.: F16B 19/10, F16B 5/06, F16B 5/02, F16B 37/04

(54) **FASTENING SYSTEM FOR FASTENING A COMPONENT TO A VEHICLE BODY**
BEFESTIGUNGSSYSTEM ZUR BEFESTIGUNG EINES BAUTEILS AN EINER FAHRZEUGKAROSSERIE
SYSTÈME DE FIXATION PERMETTANT DE FIXER UNE PIÈCE À UNE CARROSSERIE DE VÉHICULE

(30) Priority: 14.12.2017 DE 102017129954
(43) Date of publication of application: 21.10.2020
(73) Proprietor: Illinois Tool Works Inc., Glenview, IL 60025 (US)
(72) Inventor: NOUPOUE, Bruno, Glenview, IL 60025 (US); BOHL, Marina, Glenview, IL 60025 (US)
(74) Representative: HGF
(86) International application number: PCT/US2018/064845
(87) International publication number: WO 2019/118398

(56) References cited:
- EP-A1- 0 414 162
- EP-B1- 0 414 162
- WO-A1-2009/109272
- WO-A2-03/069971
- WO-A2-2008/118420
- WO-A2-2010/033149
- DE-B3-102006 008 306
- US-A1- 2013 039 716

## Description

### TECHNICAL FIELD

The invention relates to a fastening system for fastening a component, in particular a jacking point, to a vehicle body, and to a vehicle having such a fastening system.

### BACKGROUND

Jacking points serve as engagement points for lifting units such as, for example, jacks or lifting platforms for lifting a vehicle. A vehicle usually has four such jacking points which are disposed so as to as to be distributed on a vehicle floor and in each case close a floorpan hole provided in the vehicle floor. Known jacking points are integrally produced from plastics material, for example, and have one or a plurality of latching elements that extend away from a component and which are routed through the floorpan hole and latch to the vehicle floor. Such jacking points are described in DE 10 2007 012 931 B3 and EP 1 291 255 A2. Multiple-part jacking points which additionally to a component having latching elements have an expansion pin that is introducible into the component are also known. The expansion pin is pushed through a clearance opening of the component and ensures an outward expansion of the latching elements that delimit the clearance opening. jacking points of this type are known from DE 198 31 548 C1 and DE 10 2006 008 306 B3. In the case of all these jacking points a portion of the vehicle floor is clamped between the component and the latching elements.

The fastening systems described have in common that said fastening systems are suitable only for a specific body thickness and thus for a specific vehicle type. When used in body thicknesses other than those envisaged, a reliable and in particular a tight connection to the vehicle floor can no longer be achieved. A jack bracket having a bracket member having an elongate centering member that protrudes through a floorpan hole of a vehicle and a latching member that surrounds the centering member is described in EP 2 020 352 A2. The centering member and the latching member are connected to one another in an axially adjustable manner by way of a tension screw that runs through the two members. The latching member is moved toward the centering member and thus the bracket member by adjusting the tension screw, wherein support faces of the latching member on the internal side of the vehicle floor come into contact with the vehicle floor and thus brace the bracket member that is disposed on the external side of the vehicle floor in relation to the vehicle floor. The jack bracket is indeed suitable for different thicknesses of the floorpan wall. However, the jack bracket is very bulky and requires a lot of space in particular on the internal side of the vehicle. Moreover, the jack bracket can only be disassembled with great complexity. WO03069971A2 discloses a known fastening system.

### SUMMARY

The invention is based on the object of making available a fastening system which, while having a compact construction mode, is suitable for use in a multiplicity of different vehicle types.

The invention achieves the object by a fastening system according to claim 1. Advantageous design embodiments are the subject matter of the dependent claims, of the description, as well as of the figures.

The fastening system according to the invention for fastening a component, in particular a jacking point, to a vehicle body, comprises the component having a clearance opening that extends along a longitudinal axis, a retention ring which is mounted so as to be movable along the longitudinal axis in the clearance opening on the component, wherein the retention ring on an end portion that protrudes from the clearance opening has retaining protrusions for latching to a retention opening of the vehicle body, a locking pin that in an introduction direction along the longitudinal axis is insertable through the clearance opening into the retention ring, wherein the locking pin has an external thread which in an inserted state engages with an internal thread of the retention ring in such a manner that the retention ring, on account of the locking pin being screwed into the retention ring, is moved counter to the introduction direction of the locking pin toward the component.

The fastening system consequently comprises the component to be fastened, the retention ring that retains the component on the vehicle body, and the locking pin. The retention ring can be insertable into the clearance opening of the component and optionally be releasable from said component again, or already be produced conjointly with the component, for example in a plastics injection molding method. The component, the retention ring, and/or the locking pin can be composed of plastics material. The locking pin can also be produced in a plastics injection molding method. The component can in particular be a jacking point which can serve as an engagement point for a jack or a lifting platform. The vehicle body that comprises the retention opening in this case can in particular be a vehicle floorpan. The component can however also be a line support for receiving lines or cables that are to be routed along the body.

The retention ring within the clearance opening is mounted so as to be movable on the component, in particular on a wall that delimits the clearance opening. The retention ring in a movement along the clearance opening can thus penetrate the component to a dissimilar extent, wherein however an end portion of the retention ring at all times protrudes from the clearance opening. This end portion in a state of the fastening system assembled on the vehicle body penetrates the retention opening of the vehicle body, wherein the retaining protrusions latch in particular with the circumferential periphery of the retention opening. The portion of the vehicle body that retains the fastening system herein is received between the component, in particular a bearing face of the component, and the retaining protrusions of the retention ring. By screwing the locking pin into the retention ring, the retention ring by virtue of the interaction of the threads is drawn to the component in a manner counter to the interaction direction of the locking pin. A head of the locking pin herein is supported in the manner of a counter bearing on a bearing face of the component. The retention ring thus moves further into the clearance opening of the component, on account of which the fastening system is braced in relation to the vehicle body. The fastening system according to the invention can in particular be preassembled in that the locking pin is introduced at least somewhat into the retention ring already prior to the end portion of the retention ring being introduced into the retention opening. The individual elements of the fastening system are thus connected to one another in a substantially captive manner. The fastening system in its entirety can thus be stored and transported. The locking pin herein is introduced into the retention ring only so far such that an axial movement of the retention ring continues to be possible and the fastening system continues to be suitable for receiving a body portion between the component and the retaining protrusions of the retention ring. For the preassembly, the locking pin can be driven or else pushed into the retention ring.

By virtue of the axial adjustability of the retention ring different spacings can be set between the retaining protrusions of the retention ring and the component, this rendering the fastening system useful for largely dissimilar body thicknesses. The fastening system is consequently suitable for a multiplicity of different vehicle types since said fastening system can be reliably fastened to the vehicle body in the event of dissimilar body thicknesses. A maximum value for the body thickness results from the spacing between the component and the retaining protrusions of the retention ring in the position of the retention ring in which the latter is deployed to the maximum from the component. In the case of such a maximum body thickness the locking pin does not have to be screwed into the retention ring but can also only be pushed in. The fastening system according to the invention is moreover particularly compact since the retention ring at least in portions is received in the component and in the assembled state extends only slightly into the vehicle interior.

According to the invention, the retention ring on the external side thereof has latching protrusions which are configured so as to elastically deform toward the inside when the retention ring is introduced into the clearance opening of the component, and so as to subsequently return to the initial position of said latching protrusions while the latter engage in guide grooves of the component that run parallel with the longitudinal axis. The retention ring can thus be configured so as to be insertable into the clearance opening, in particular in a direction that is counter to the introduction direction. The latching protrusions when introducing the retention ring into the clearance opening come into contact with an end of a wall that delimits the clearance opening, in particular with end detents of the guide grooves, on account of which the latching protrusions are deformed toward the inside. Deformed toward the inside herein refers to a deformation at least partially in the radial direction toward a center of the retention ring. To this end, latching protrusions can be chamfered on the face thereof that comes into contact with the end of the wall, this facilitating the introduction. The latching protrusions can be configured, for example, on elastic lugs which are deformable toward the inside. The latching protrusions in a movement of the retention ring along the longitudinal axis run in each case along one of the guide grooves. The retention ring is thus guided on the longitudinal axis. The end detents of the guide grooves, when interacting with the latching protrusions, moreover serve for a reliable retention of the retention ring in the clearance opening, wherein the end detents delimit a movement of the retention ring counter to the introduction direction. The retention ring is thus not unintentionally released from the component.

According to the invention, the locking pin in the state when inserted into the retention ring prevents the deformation of the latching protrusions toward the inside. The locking pin herein can bear on an internal side of the retention ring so as to be level with the latching protrusions, in particular on optionally provided deformable lugs. A movement of the latching protrusions, or the lugs, respectively, toward the inside into the retention ring is thus blocked. The locking pin can prevent the deformation of the latching protrusions in particular already in the preassembled state of the fastening system discussed above. Consequently, the locking pin does not have to be completely screwed into the retention ring. This guarantees a reliable retention of the insertable retention ring on the component, in particular already in the preassembled state of the fastening system. Above all, an undesirable release of the retention ring from the component is thus reliably prevented.

According to one design embodiment the retention ring on the external side thereof has at least one guiding protrusion which in the state when the retention ring is received in the component, in order for the retention ring to be movably mounted in the clearance opening, is guided in a guide groove of the component that runs parallel with the longitudinal axis. The at least one guiding protrusion can be formed by the latching protrusions discussed above, however can also be configured so as to be separate from the latter. A plurality of guiding protrusions can in particular be provided, wherein at least part of said guiding protrusions are formed by the latching protrusions discussed. A plurality of guiding protrusions can in particular be disposed so as to be distributed symmetrically along the circumference of the retention ring. The guiding protrusions, in the interaction with the respective guide groove thereof, enable the axial movement of the retention ring along the clearance opening, and prevent a rotation of the retention ring about the longitudinal axis, in particular when driving the locking pin in or out. The retention ring is thus rotationally fixed, and the movement of the retention ring is restricted to the longitudinal axis.

According to one design embodiment at least one guiding protrusion is configured separately from the latching protrusions. As has already been mentioned, the latching protrusions can serve as guiding protrusions. According to this design embodiment, however, at least one guiding protrusion is provided independently from the latching protrusions. On account thereof, the movement of the retention ring along the clearance opening is stabilized since the at least one guiding protrusion in the interaction with the guide groove thereof prevents a rotation of the retention ring about the longitudinal axis. The latching protrusions are thus in particular relieved of the rotational forces which arise when driving the locking pin into the retention ring.

According to one design embodiment the retaining protrusions of the retention ring are configured so as to elastically deform toward the inside when the end portion of the retention ring is introduced into the retention opening, and so as to return to the initial position of said retaining protrusions once the latter have passed through the retention opening. The retaining protrusions come into contact in particular with a circumferential periphery of the retention opening when the retention ring is introduced into the retention opening of the vehicle body, on account of which the retaining protrusions are deformed toward the inside. The retaining protrusions subsequently latch with the vehicle body behind the retention opening. To this end, the retaining protrusions can be configured on elastic lugs, for example, which deform toward the inside when the end portion is introduced into the retention opening. A disassembly can in particular also be possible in a corresponding manner, wherein the retaining protrusions, in particular the lugs that support the retaining protrusions, in this instance are configured so as to again elastically deform toward the inside when the end portion of the retention ring is extracted from the retention opening.

According to one design embodiment the locking pin in the state when inserted into the retention ring prevents the deformation of the retaining protrusions toward the inside. In a manner corresponding to the design embodiment discussed above, the locking pin can consequently not only prevent the deformation of the latching protrusions but also that of the retaining protrusions. The locking pin herein bears on an internal side of the retention ring so as to be level with the retaining protrusions, in particular on optionally provided deformable lugs. This, at least in the state of the locking pin when screwed into the retention ring, guarantees a reliable retention of the retention ring and thus of the component on the retention opening of the vehicle body. The locking pin for disassembly herein is unscrewed so far such that a deformation of the retaining protrusions toward the inside is released again. The fastening system can in particular be reverted to the preassembly position and retrieved as a unit by partially unscrewing the locking pin.

According to one design embodiment the retaining protrusions on the lower side thereof that faces away from the component are chamfered. This facilitates the introduction of the end portion of the retention ring into the retention opening of the vehicle body. When introduced into the retention opening the introduction chamfers slide along the circumferential periphery of the retention opening, on account of which an inwardly directed force acts on the retaining protrusions, or on optionally provided lugs that support the retaining protrusions, respectively. The retaining protrusions on an upper side that is opposite the lower side can have contact faces that for bearing on the internal side of the vehicle body run in the radial direction.

According to one design embodiment the retaining protrusions are chamfered on the upper side thereof that points toward the component. This facilitates the outward movement of the end portion of the retention ring from the retention opening of the vehicle body. The disassembly of the fastening system from the vehicle body is thus enabled or facilitated, respectively. When moving outward from the retention opening, the extraction chamfers slide along the circumferential periphery of the retention opening, on account of which an inwardly directed force acts on the retaining protrusions, or on optionally provided lugs that support the retaining protrusions, respectively. The retaining protrusions can in particular be chamfered on the lower side thereof that points away from the component as well as on the opposite upper side that points toward the component.

The vehicle according to the invention comprises at least one fastening system according to the invention as discussed above, in particular in the case of a component fastened to the vehicle body by way of the fastening system. The retention ring of the fastening system in the assembly of the fastening system on a vehicle body is configured so as to be moved counter to the introduction direction of the locking pin toward the component when the locking pin is screwed into the retention ring. On account thereof, the end portion of the retention ring protrudes into a retention opening of the vehicle body, wherein the retaining protrusions latch on the retention opening on an internal side of the vehicle body.

### BRIEF DESCRIPTION OF THE DRAWINGS

A design embodiment of the invention will be explained in more detail hereunder by means of figures in which in a schematic manner:
figure 1 shows a perspective illustration of the fastening system according to the invention;
figure 2 shows the retention ring from figure 1;
figure 3 shows the fastening system from figure 1 in an assembled state;
figure 4a shows a plan view of the fastening system from figure 3;
figure 4b shows the illustration from figure 4a without the locking pin;
figure 5 shows a side view of the fastening system from figure 4b;
figure 6 shows a partially illustrated sectional view along the section line A-A illustrated in figure 4a;
figure 7 shows a partially illustrated sectional view along the section line B-B illustrated in figure 5;
figure 8 shows a partially illustrated side view along the section line D-D illustrated in figure 7;
figure 9 shows a partially illustrated sectional view along the section line C-C illustrated in figure 4b;
figure 10 shows a perspective view of the fastening system disposed on a vehicle body of a first thickness; and
figure 11 shows the fastening system disposed on a vehicle body of a second thickness.

In as far as not otherwise stated, the same reference signs hereunder refer to identical items.

### DETAILED DESCRIPTION

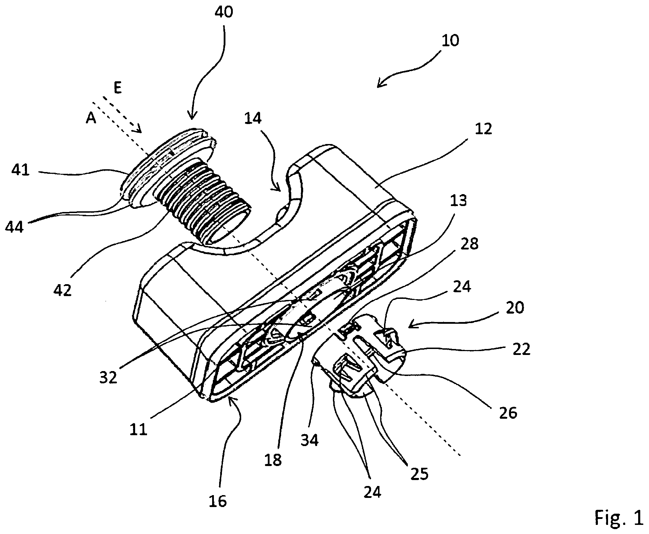

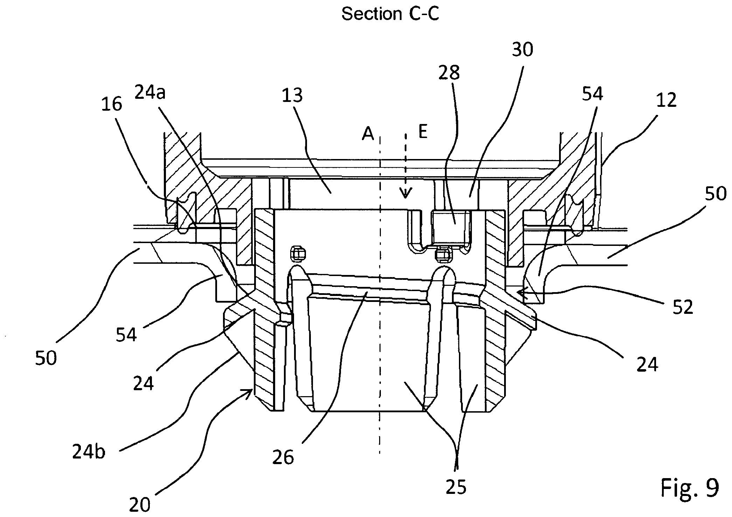

The fastening system 10 comprises a component 12 to be fastened, a retention ring 20 that is insertable into the component 12, and a locking pin 40 that is insertable into the retention ring 20, as can be seen in particular in figure 1. The component 12 in the present exemplary embodiment is a jacking point having an engagement face 14 for a lifting unit, for example a jack or a lifting platform. The component 12 has a bearing face 16 for bearing on a vehicle body 50 (cf. figures 9 to 11, and a clearance opening 18 which extends between the engagement face 14 and the bearing face 16 and is delimited by a wall 13. The clearance opening 18 runs along a longitudinal axis A.

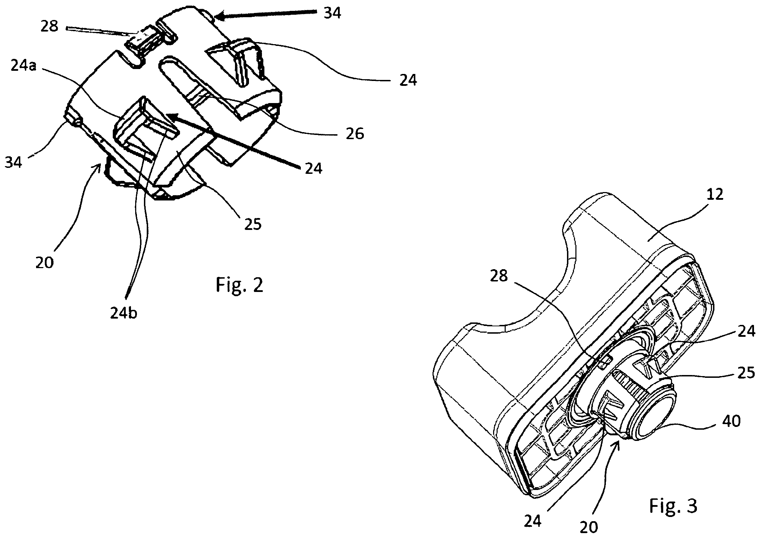

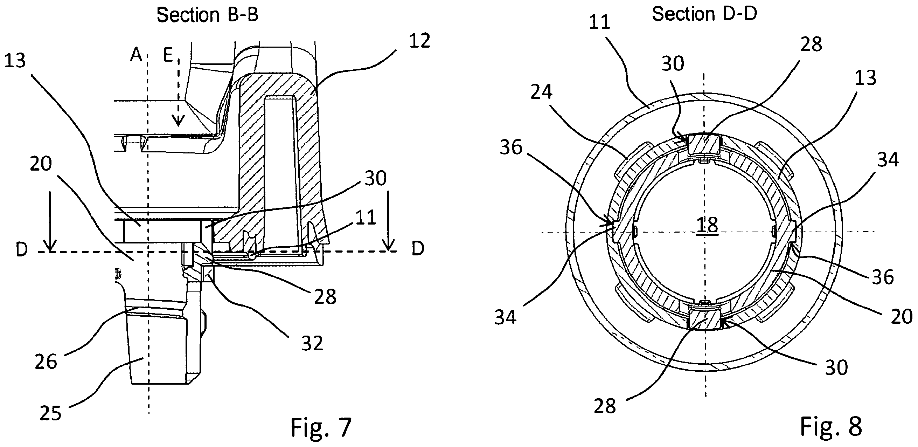

The retention ring 20 is illustrated in detail in figure 2. Said retention ring 20 has two mutually opposite latching protrusions 28 which are molded on flexible lugs. The latching protrusions 28 in the inserted state of the retention ring 20 in the component 12 engage in each case in one guide groove 30 (cf. figure 7) which runs parallel with the longitudinal axis L, wherein a guided axial displaceability of the retention ring 20 along the longitudinal axis A within the clearance opening 18 is provided on account of the interaction of the latching protrusions 28 and the guide grooves 30. When the retention ring 20 is inserted into the clearance opening 18 of the component 12, the latching protrusions 28 come into contact with the lower end of the wall 13 and, on account thereof, are elastically deformed toward the inside. To this end, the latching protrusions 28 on the upper side thereof that faces the component 12 have chamfered faces. When the latching protrusions 28 are subsequently moved to as to communicate with the guide grooves 30, said latching protrusions 28 under engagement in the guide grooves 30 are conversely deformed back to the initial position of said latching protrusions 28. The retention ring 20 can thus be clip-fitted in the clearance opening 18 of the component 12. The retention ring for latching on a retention opening 52 of the vehicle body 50 (cf. figures 9 to 11) furthermore has retaining protrusions 24 configured on elastic lugs 25. The retaining protrusions 24 are configured on an end portion 22 of the retention ring 20, said end portion 22 for attaching the fastening system to the vehicle body 50 being pushed through the retention opening 52. The retention ring 20 moreover has guiding protrusions 34 which are configured separately from the latching protrusions 28 and which are molded on mutually opposite sides on an external side of the retention ring 20. The guiding protrusions 34 in the received state of the retention ring 20 in the component 12 engage in guide grooves 36 of the wall 13 that run parallel with the longitudinal axis L and facilitate the guiding of the retention ring 20 within the clearance opening 18. An unintentional rotation of the retention ring is thus in particular prevented, as will yet be explained. The retention ring 20 moreover has an internal thread 26.

The locking pin 40 has a pin head 41 and a pin body that is provided with an external thread 42. The pin head 41 is circumferentially surrounded by a double lip seal 44.

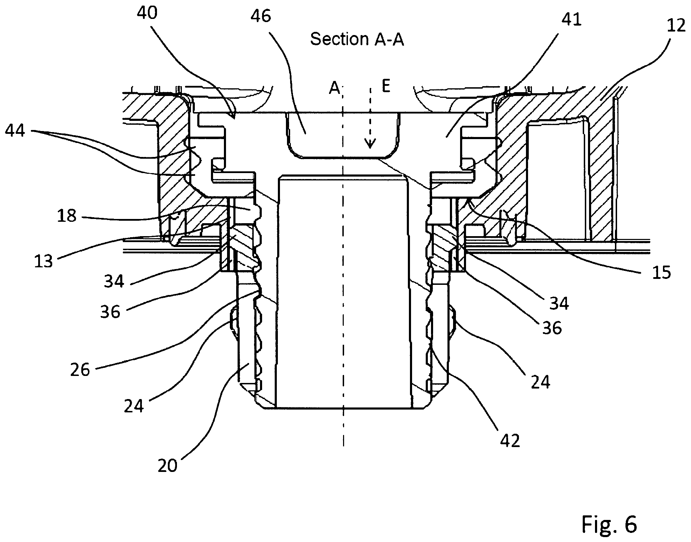

In order for the component 12 to be fastened to a vehicle body, the in particular preassembled fastening system is pushed against a vehicle body 50, wherein the retention ring 20 by way of its end portion 22 penetrates the retention opening 52 of the vehicle body 50. The retaining protrusions 24 herein engage behind the retention opening 52, as can be seen in particular in figure 9. The locking pin 40 is subsequently screwed into the retention ring 20 as far as possible. By virtue of the interaction of the internal thread 26 of the retention ring 20 and the external thread 42 of the locking pin 40, the retention ring 20 is moved counter to the introduction direction E toward the component 12. The locking pin 40 way of the pinhead 41 thereof is supported in the manner of a counter bearing on a bearing face 15 of the component 12, as can be seen in figure 6. On account thereof, the spacing between the component 12 and the retaining protrusions 24 of the retention ring 20 can be set, and the fastening system be braced in relation to the vehicle body. The fastening system according to the invention is thus suitable for dissimilar body thicknesses and thus for different vehicle types. Moreover, the fastening system according to the invention is particularly compact, in particular because the retention ring is at least in portions received in the component.

The fastening system from figure 1 is illustrated in an assembled state in figure 3. The retention ring 20 herein is inserted from below, counter to an introduction direction E, into the component 12, in the manner discussed above. The locking pin 40 is inserted from above, along the introduction direction E, into the retention ring 20. The external thread 42 of the locking pin 40 meshes with the internal thread 26 of the retention ring 20. The locking pin 40 in the state illustrated in figure 3 is screwed into the retention ring 20 so far that said locking pin 40 prevents any deformation of the retaining protrusions 24 toward the inside. If the fastening system is attached to a vehicle body, no undesirable release of the fastening system from the vehicle body can thus arise. The locking pin 40 in this instance likewise prevents the deformation of the latching protrusions 28 toward the inside, such that an undesirable release of the retention ring 20 from the component 12 can also not arise. However, the fastening system in the state illustrated in figure 3 is not connectable to a body, since the retaining protrusions 24 cannot be deformed toward the inside. However, the fastening system 10 can also be rendered so as to be in a preassembled state in which all elements, thus the retention ring, the component, and the locking pin, are securely connected to one another but connecting the fastening system to a vehicle body continues to be possible. This can be achieved in that the locking pin is pushed or screwed into the retention ring only so far that a deformation of the retaining protrusions toward the inside continues to be possible. The fastening system in this state can be stored and transported in a simple manner. The locking pin 40 already in this preassembled state can reliably prevent an undesirable deformation of the latching protrusions 28 toward the inside.

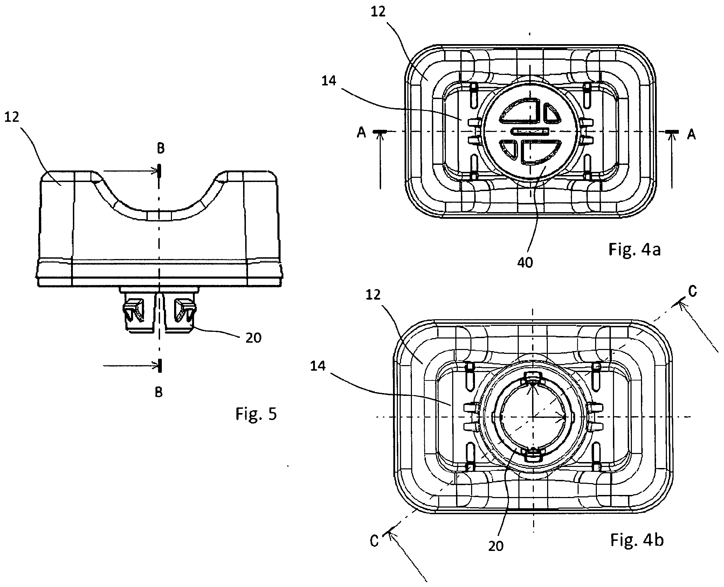

The fastening system is illustrated in a plan view or a lateral view, respectively, in figures 4a, 4b, and 5. The retention ring 20 as well as the locking pin 40 are inserted into the component 12 in figure 4a, while only the retention ring 20 is inserted in figures 4b and 5. A plurality of section lines can be seen, wherein the associated sectional views will be discussed hereunder.

Figure 6 in portions shows a sectional view along the section line A-A of figure 4a. It can be seen herein that the retention ring 20 that is inserted in the clearance opening 18 of the component 12 by way of the guiding protrusions 34 and the guide grooves 36 is mounted so as to be movable along the longitudinal axis A. By contrast to the guide grooves 30 of the latching protrusions 28, the guide grooves 36 of the guiding protrusions 34 are open toward the bottom. The guiding protrusions 34 therefore do not have to be configured so as to be deformable in order for an insertion of the retention ring 20 into the clearance opening 18 to be enabled. The retention ring 20 in the movement thereof is restricted to the longitudinal axis A on account of the interaction of the guiding protrusions 34 and the guide grooves 36; a rotation of the retention ring 20 is particularly prevented, said rotation potentially arising by screwing in the locking pin, for example. It is thus guaranteed that the retention ring 20 actually moves, counter to the introduction direction E, toward the component 12 when the locking pin 40 is screwed in. The locking pin 40, when screwed in in such a manner, by way of the pinhead 41 thereof, more specifically by way of the seal 44 of the pinhead 41, is supported in the manner of a counter bearing on the bearing face 15 of the component 12. A movement of the locking pin 40 along the introduction direction E is thus prevented, so as to ensure that the locking pin 40 is not moved downward but the retention ring 20 is moved upward when the locking pin 40 is screwed into the retention ring 20. The seal 44 herein seals the clearance opening 18 between the locking pin 40 and the component 12 in such a manner that no contaminations can make their way through the retention opening of the vehicle body into the vehicle interior while in the assembled state of the fastening system. Moreover, a tool receptacle 46 can be seen in the pinhead 41 of the locking pin 40, a tool for screwing the locking pin 40 in or out being able to be engaged in said tool receptacle 46.

Figure 7 shows a sectional view along the section line B-B of figure 5, wherein only a half of the fastening system is illustrated. It can be seen in this section how the latching protrusions 28 of the retention ring 20 are guided in guide grooves 30 of the component 12. By contrast to the guide grooves 36, the guide grooves 30 are delimited toward the bottom by an end detent 32. In the state of the retention ring 20 deployed to the maximum from the clearance opening 18, the latching protrusions 28 come into contact with the end detents 32 and thus prevent a release of the retention ring 20 from the component 12. A deformation of the latching protrusions 28 toward the inside is no longer possible in particular in the case of an inserted locking pin 40, and the retention ring 20 is thus reliably held on the component 12, as has been discussed above. The latching protrusions 28, on account of the guidance thereof along the guide grooves 30, also act as guiding protrusions, thus guiding the retention ring 20 on the longitudinal axis A, and preventing a rotation of the retention ring 20. However, the latching elements 28, 30 are advantageously relieved of the rotational forces on account of the separate guide elements 34, 36.

Figure 8 shows a sectional view along the section line D-D of figure 7, wherein the sectional view of figure 8 extends across the entire diameter of the retention ring 20. This is a view seen in the direction of the introduction direction E. It can be seen in particular that the wall 13 that delimits the clearance opening 18 has two opposite guide grooves 30 that run along the longitudinal axis A, in each case one of the latching protrusions 28 running in said guide grooves 30, and two mutually opposite guide grooves 36, in each case one guiding protrusion 34 running therein. The latching protrusions 28 herein also act as guiding protrusions, thus counteracting an undesirable rotational movement of the retention ring 20. Moreover, the four retaining protrusions 24 that lie further below in the viewing direction can be seen, only one of said retaining protrusions 24 being provided with a reference sign. An annular seal of the component 12 which surrounds the clearance opening 18 and which guarantees a sealing of the component 12 in relation to the vehicle body 50 is identified by the reference sign 11.

Figure 9 shows a sectional view along the section line C-C of figure 4b, wherein a vehicle body 50 having a retention opening 52 is additionally illustrated here. It can in particular be seen in the case of this sectional view how the retaining protrusions 24 engage behind the retention opening 52 and latch with the vehicle body 50. When introducing the retention ring 20, the retaining protrusions 24 by way of the chamfered lower sides 24b thereof come into contact with curved portions 54 of the body 50, whereupon a force acting into the interior of the retention ring 20 is generated, and the retaining protrusions 24 conjointly with the elastic lugs 25 are thus deformed toward the inside. After the penetration of the retention opening 52 by the retention ring 20, the lugs 25 together with the retaining protrusions 24 disposed thereon snap back to the initial position thereof, on account of which the latching protrusions 24 latch behind the curved portions 54 of the body 50. The fastening system is thus retained on the body 50. In the case of a screwed-in locking pin 40, a deformation of the retaining protrusions 24 together with the lugs 25 thereof toward the inside is moreover prevented in the manner discussed above, and an undesirable release of the fastening system from the body is thus avoided. For a disassembly of the fastening system, the locking pin (not illustrated here) first has to be screwed sufficiently far out of the retention ring 20 such that a deformation of the lugs 25 is enabled again. When the fastening system is subsequently pulled from the body, the retaining protrusions 24, by virtue of the chamfered upper sides 24a thereof, again conjointly with the lugs 25, are deformed toward the inside and slide into the retention opening 52. The fastening system can thus be disassembled in a simple manner. In particular, the fastening system for disassembly can also be in the preassembled state, that is to say that the locking pin can be at least slightly screwed into the retention ring.

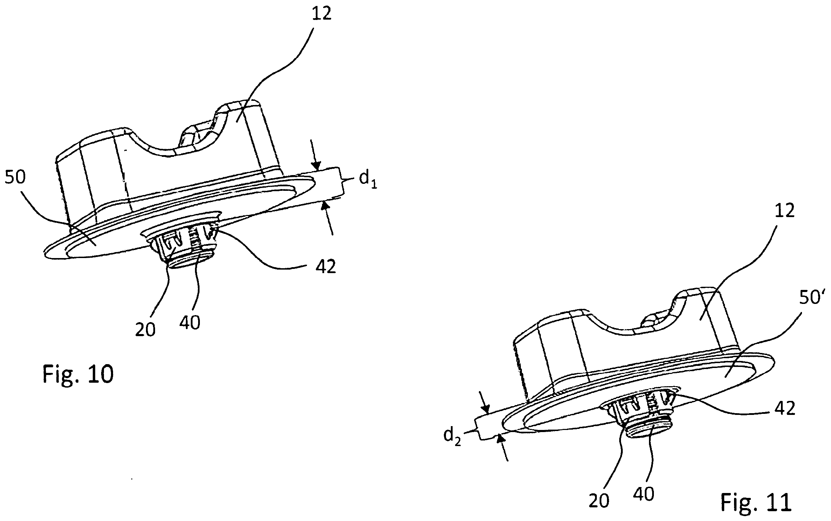

The fastening system in figures 10 and 11 is illustrated so as to be attached to vehicle bodies of dissimilar thicknesses. The fastening system in figure 10 is attached to a vehicle body 50 having a thickness d₁, the latter being greater than a thickness d₂ of a vehicle body 50' to which the fastening system is attached in figure 11. Accordingly, the retention ring 20 in figure 11 has been drawn farther into the component 12 than in figure 10 on account of the locking pin 40 having been screwed in. As can be seen, the locking pin 40 in figure 11 therefore protrudes farther beyond a lower end of the retention ring 20 than in figure 10. It becomes evident herein that the fastening system according to the invention is suitable for vehicle bodies of dissimilar thicknesses.

### List of reference signs

- 10: Fastening system
- 11: Annular seal
- 12: Component
- 13: Wall of the clearance opening
- 14: Engagement face
- 15: Engagement face
- 16: Engagement face
- 18: Clearance opening
- 20: Retention ring
- 22: End portion of the retention ring
- 24: Retaining protrusions
- 24a: Chamfered upper side
- 24b: Chamfered lower side
- 25: Lugs
- 26: Internal thread
- 28: Latching protrusions
- 30: Guide grooves
- 32: End detents
- 34: Guiding protrusions
- 36: Guide grooves
- 40: Locking pin
- 41: Pin head
- 42: External thread
- 44: Seal
- 46: Tool receptacle
- 50, 50': Vehicle body
- 52: Retention opening
- 54: Curved portion

## Claims

1. A fastening system for fastening a component, in particular a jacking point, to a vehicle body, comprising the component (12) having a clearance opening (18) that extends along a longitudinal axis (A), a retention ring (20) which is mounted so as to be movable along the longitudinal axis (A) in the clearance opening (18) on the component (12), wherein the retention ring (20) on an end portion (22) that protrudes from the clearance opening (18) has retaining protrusions (24) for latching to a retention opening (52) of the vehicle body (50), furthermore comprising a locking pin (40) that in an introduction direction (E) along the longitudinal axis (A) is insertable through the clearance opening (18) into the retention ring (20), wherein the locking pin (40) has an external thread (42) which in an inserted state engages with an internal thread (26) of the retention ring (20) in such a manner that the retention ring (20), on account of the locking pin (40) being screwed into the retention ring (20), is moved counter to the introduction direction (E) of the locking pin (40) toward the component (12);
**characterized in that** the retention ring (20) on the external side thereof has latching protrusions (28) which are configured so as to elastically deform toward the inside when the retention ring (20) is introduced into the clearance opening (18) of the component (12), and so as to subsequently return to the initial position of said latching protrusions (28) while the latter engage in guide grooves (30) of the component (12) that run parallel with the longitudinal axis (A); and **in that** the locking pin (40) in the state when inserted into the retention ring (20) prevents the deformation of the latching protrusions (28) toward the inside.

2. The fastening system as claimed in claim 1, wherein the retention ring (20) on the external side thereof has at least one guiding protrusion (28, 34) which in the state when the retention ring (20) is received in the component (12), in order for the retention ring (20) to be movably mounted in the clearance opening (18), is guided in a guide groove (30, 36) of the component (12) that runs parallel with the longitudinal axis (L).

3. The fastening system as claimed in claim 2, wherein at least one guiding protrusion (34) is configured separately from the latching protrusions (28).

4. The fastening system as claimed in one of the preceding claims, wherein the retaining protrusions (24) of the retention ring (20) are configured so as to elastically deform toward the inside when the end portion (22) of the retention ring (20) is introduced into the retention opening (52), and so as to return to the initial position of said retaining protrusions (24) once the latter have passed through the retention opening (52).

5. The fastening system as claimed in claim 4, wherein the locking pin (40) in the state when inserted into the retention ring (20) prevents the deformation of the retaining protrusions (24) toward the inside.

6. The fastening system as claimed in either of claims 4 and 5, wherein the retaining protrusions (24) on the lower side (24b) thereof that faces away from the component (12) are chamfered.

7. The fastening system as claimed in one of the preceding claims, wherein the retaining protrusions (24) on the upper side (24a) thereof that faces the component (12) are chamfered.

8. A vehicle having at least one fastening system as claimed in one of the preceding claims.

## Patentansprüche

1. Befestigungssystem zur Befestigung eines Bauteils, insbesondere einer Wagenheberaufnahme, an einer Fahrzeugkarosserie, aufweisend das Bauteil (12), das eine Durchgangsöffnung (18) aufweist, die sich entlang einer Längsachse (A) erstreckt, einen Haltering (20), der so montiert ist, dass er entlang der Längsachse (A) in der Durchgangsöffnung (18) an dem Bauteil (12) beweglich ist, wobei der Haltering (20) an einem Endabschnitt (22), der von der Durchgangsöffnung (18) vorsteht, Haltevorsprünge (24) zum Einrasten in eine Halteöffnung (52) der Fahrzeugkarosserie (50) aufweist, ferner aufweisend einen Verriegelungsstift (40), der in einer Einführrichtung (E) entlang der Längsachse (A) durch die Durchgangsöffnung (18) hindurch in den Haltering (20) einsetzbar ist, wobei der Verriegelungsstift (40) ein Außengewinde (42) aufweist, das in einem eingesetzten Zustand mit einem Innengewinde (26) des Halterings (20) derart in Eingriff steht, dass der Haltering (20), aufgrund des Einschraubens des Verriegelungsstifts (40) in den Haltering (20), entgegen der Einführrichtung (E) des Verriegelungsstifts (40) in Richtung des Bauteils (12) bewegt wird;
**dadurch gekennzeichnet, dass** der Haltering (20) auf seiner Außenseite Rastvorsprünge (28) aufweist, die so ausgestaltet sind, dass sie sich elastisch nach innen verformen, wenn der Haltering (20) in die Durchgangsöffnung (18) des Bauteils (12) eingeführt wird, und so, dass sie anschließend in die Ausgangsstellung der Rastvorsprünge (28) zurückzukehren, während diese in Führungsnuten (30) des Bauteils (12) eingreifen, die parallel zu der Längsachse (A) verlaufen; und dadurch, dass der Verriegelungsstift (40) in dem Zustand, in dem er in dem Haltering (20) eingesetzt ist, die Verformung der Rastvorsprünge (28) nach innen verhindert.

2. Befestigungssystem nach Anspruch 1, wobei der Haltering (20) an seiner Außenseite zumindest einen Führungsvorsprung (28, 34) aufweist, der in dem Zustand, in dem der Haltering (20) in dem Bauteil (12) aufgenommen ist, damit der Haltering (20) beweglich in der Durchgangsöffnung (18) montiert wird, in einer Führungsnut (30, 36) des Bauteils (12) geführt wird, die parallel zu der Längsachse (L) verläuft.

3. Befestigungssystem nach Anspruch 2, wobei zumindest ein Führungsvorsprung (34) getrennt von den Rastvorsprüngen (28) ausgestaltet ist.

4. Befestigungssystem nach einem der vorhergehenden Ansprüche, wobei die Haltevorsprünge (24) des Halterings (20) so ausgestaltet sind, dass sie sich beim Einführen des Endabschnitts (22) des Halterings (20) in die Halteöffnung (52) elastisch nach innen verformen, und so, dass sie in die Ausgangsstellung der Haltevorsprünge (24) zurückkehren, sobald sich diese durch die Halteöffnung (52) hindurchbewegt haben.

5. Befestigungssystem nach Anspruch 4, wobei der Verriegelungsstift (40) in dem Zustand, in dem er in dem Haltering (20) eingesetzt ist, die Verformung der Haltevorsprünge (24) nach innen verhindert.

6. Befestigungssystem nach einem der Ansprüche 4 oder 5, wobei die Haltevorsprünge (24) an ihrer von dem Bauteil (12) abgewandten Unterseite (24b) abgeschrägt sind.

7. Befestigungssystem nach einem der vorhergehenden Ansprüche, wobei die Haltevorsprünge (24) an ihrer dem Bauteil (12) zugewandten Oberseite (24a) abgeschrägt sind.

8. Fahrzeug mit zumindest einem Befestigungssystem nach einem der vorhergehenden Ansprüche.

## Revendications

1. Système de fixation pour la fixation d'un élément, en particulier un point de levage, à une carrosserie de véhicule, comprenant l'élément (12) ayant une ouverture de dégagement (18) qui s'étend le long d'un axe longitudinal (A), une bague de retenue (20) qui est montée afin d'être mobile le long de l'axe longitudinal (A) dans l'ouverture de dégagement (18) sur l'élément (12), dans lequel la bague de retenue (20) sur une partie d'extrémité (22) qui fait saillie à partir de l'ouverture de dégagement (18) a des saillies de retenue (24) pour le verrouillage à une ouverture de retenue (52) de la carrosserie de véhicule (50), comprenant en outre une broche de verrouillage (40) qui dans une direction d'introduction (E) le long de l'axe longitudinal (A) peut être insérée à travers l'ouverture de dégagement (18) dans la bague de retenue (20), dans lequel la broche de verrouillage (40) a un filetage externe (42) qui, dans un état inséré, s'engage avec un filetage interne (26) de la bague de retenue (20) d'une manière telle que la bague de retenue (20), du fait que la broche de verrouillage (40) est vissée dans la bague de retenue (20), est déplacée à l'encontre de la direction d'introduction (E) de la broche de verrouillage (40) vers l'élément (12) ;
**caractérisé en ce que** la bague de retenue (20) présente sur son côté externe des saillies de verrouillage (28) qui sont configurées afin de se déformer élastiquement vers l'intérieur lorsque la bague de retenue (20) est introduite dans l'ouverture de dégagement (18) de l'élément (12), et afin de revenir ultérieurement à la position initiale desdites saillies de verrouillage (28) tandis que celles-ci s'engagent dans des rainures de guidage (30) de l'élément (12) qui s'étendent parallèlement à l'axe longitudinal (A) ; et **en ce que** la broche de verrouillage (40) à l'état inséré dans la bague de retenue (20) empêche la déformation des saillies de verrouillage (28) vers l'intérieur.

2. Système de fixation selon la revendication 1, dans lequel la bague de retenue (20) sur son côté externe a au moins une saillie de guidage (28, 34) qui, dans l'état lorsque la bague de retenue (20) est reçue dans l'élément (12), de sorte que la bague de retenue (20) soit retenue de manière mobile dans l'ouverture de dégagement (18), est guidée dans une rainure de guidage (30, 36) de l'élément (12) qui s'étend parallèlement à l'axe longitudinal (L).

3. Système de fixation selon la revendication 2, dans lequel au moins une saillie de guidage (34) est configurée séparément des saillies de verrouillage (28).

4. Système de fixation selon l'une des revendications précédentes, dans lequel les saillies de retenue (24) de la bague de retenue (20) sont configurées afin de se déformer élastiquement vers l'intérieur lorsque la partie d'extrémité (22) de la bague de retenue (20) est introduite dans l'ouverture de retenue (52), et afin de revenir à la position initiale desdites saillies de retenue (24) une fois que celles-ci ont traversé l'ouverture de retenue (52).

5. Système de fixation selon la revendication 4, dans lequel la broche de verrouillage (40) dans l'état lorsqu'elle est insérée dans la bague de retenue (20) empêche la déformation des saillies de retenue (24) vers l'intérieur.

6. Système de fixation selon l'une quelconque des revendications 4 et 5, dans lequel les saillies de retenue (24) sur son côté inférieur (24b) qui est tourné à l'opposé de l'élément (12) sont chanfreinées.

7. Système de fixation selon l'une des revendications précédentes, **caractérisé en ce que** les saillies de retenue (24) sur son côté supérieur (24a) qui est tourné à l'opposé de l'élément (12) sont chanfreinées.

8. Véhicule avec au moins un système de fixation selon l'une quelconque des revendications précédentes.
